# EUROPÄISCHE PATENTANMELDUNG

(11) **EP 1 498 760 A2**
(43) Veröffentlichungstag der Anmeldung: **19.01.2005**
(21) Anmeldenummer: 04015914.7
(22) Anmeldetag: 06.07.2004
(51) Int. Cl.: G02B 21/00

(54) **Mikroskop und Verfahren zur Bedienung eines Mikroskops**

(30) Priorität: 16.07.2003 DE 10332468
(71) Anmelder: Leica Microsystems Wetzlar GmbH, 35578 Wetzlar (DE)
(72) Erfinder: Rentzsch, Wolfgang, 35576 Wetzlar (DE)
(74) Vertreter: Leckel, Ulf (DE)

(57) **Zusammenfassung**

Die vorliegende Erfindung betrifft ein Mikroskop (21) mit einem Okular (33), einem zur Beleuchtung eines Objekts dienenden Beleuchtungsstrahlengang (35, 37) und mit einem das Objekt abbildenden Detektionsstrahlengang (36). Zur ergonomischen, effizienten und vereinfachten Bedienung des Mikroskops (21) ist erfindungsgemäß dem Detektionsstrahlengang (36) ein Bild einer Mikroskop-Bedienoberfläche (28) überlagerbar, welches zusammen mit einem Objektbild an dem Okular (33) des Mikroskops (21) erzeugbar ist. Zur Interaktion zwischen einem Bediener und der Mikroskop-Bedienoberfläche (28) ist mindestens eine Bedienvorrichtung (1, 14) vorgesehen. Des Weiteren betrifft die vorliegende Erfindung ein Verfahren zur Bedienung eines Mikroskops (21).

## Beschreibung

Die vorliegende Erfindung betrifft ein Mikroskop. Das Mikroskop umfasst ein Okular, einen zur Beleuchtung eines Objekts dienenden Beleuchtungsstrahlengang und einen das Objekt abbildenden Detektionsstrahlengang. Weiterhin betrifft die vorliegende Erfindung ein Verfahren zur Bedienung eines Mikroskops.

Mikroskope der eingangs genannten Art sind seit langem aus der Praxis bekannt. Zur Mikroskopbedienung sind am Mikroskopstativ mehrere Betätigungselemente vorgesehen, die beispielsweise in Form von Drehknöpfen ausgeführt sind, mit denen ein Objekt in der Fokalebene positioniert bzw. fokussiert werden kann. Mit einem Schalter kann beispielsweise eine Lichtquelle zur Objektbeleuchtung ein- oder ausgeschaltet werden. Ein Hebel ermöglicht eine Betätigung eines Filterschiebers, mit welchem unterschiedliche Filter im Beleuchtungs- bzw. Detektionsstrahlengang des Mikroskops eingebracht werden können.

Je nach Ausbauform des Mikroskops können einzelne oder alle Bedienfunktionen motorisiert sein, so dass das Mikroskop beispielsweise über einen mit dem Mikroskop verbundenen Computer (fern)bedienbar ist.

Die Bedienung eines Mikroskops ist insbesondere für einen unbedarften Benutzer jedoch alles andere als effizient und ergonomisch. Üblicherweise schaut ein Mikroskopbediener durch die Okulare um beim Beginnen einer Objektuntersuchung zunächst das Objekt zu finden und einzustellen. Das heißt, er fokussiert das Objekt und positioniert es in der Fokalebene derart, dass der ihn interessierende Objektbereich über das Mikroskopobjektiv ins Okular abgebildet wird. Hierbei muss der Bediener eine Vielzahl von Betätigungselementen bedienen, welche an unterschiedlichen Stellen am Mikroskopstativ angebracht sind. Um diese zu ergreifen, muss er oftmals den Kopf bzw. die Augen von den Okularen nehmen und in Richtung der Bedienelemente schauen, um diese dann mit seiner Hand greifen und bedienen zu können. Dies ist zeitaufwändig, ermüdend und nicht ergonomisch. Auch kommt eine Fehlbedienung der Mikroskope gerade bei unerfahrenen Mikroskopbedienern regelmäßig vor, da irrtümlicherweise ein falscher Hebel betätigt wird und hierdurch nicht das gewünschte Resultat' eintritt. Aber selbst einem erfahrenen Bediener unterlaufen regelmäßig dann Bedienfehler, wenn dieser in einem Labor vorhandene Mikroskope unterschiedlicher Hersteller oder unterschiedlicher Mikroskopmodelle bzw. Ausbaustufen des gleichen Herstellers bedient.

Der vorliegenden Erfindung liegt daher die Aufgabe zugrunde, ein Mikroskop der eingangs genannten Art anzugeben und weiterzubilden, mit welchem eine ergonomische, effiziente und vereinfachte Bedienung des Mikroskops möglich ist. Weiterhin liegt der vorliegenden Erfindung die Aufgabe zugrunde, ein ergonomisches, effizientes und vereinfachtes Verfahren zur Bedienung eines Mikroskops anzugeben und weiterzubilden.

Das erfindungsgemäße Mikroskop der eingangs genannten Art löst die voranstehende Aufgabe durch die Merkmale des Patentanspruchs 1. Danach ist ein solches Mikroskop dadurch gekennzeichnet, dass dem Detektionsstrahlengang ein Bild einer Mikroskop-Bedienoberfläche überlagerbar ist, welches zusammen mit einem Objektbild an dem Okular des Mikroskops erzeugbar ist und dass zur Interaktion zwischen einem Bediener und der Mikroskop-Bedienoberfläche mindestens eine Bedienvorrichtung vorgesehen ist.

In erfindungsgemäßer Weise ist erkannt worden, dass ein zur Verfügung Stellen einer Mikroskop-Bedienoberfläche beispielsweise im Okular des Mikroskops in ganz besonders vorteilhafter Weise dem Bediener einerseits unmittelbar das Objektbild und andererseits die dem Objektbild überlagerte Mikroskop-Bedienoberfläche eine grundlegend vereinfachte Bedienung ermöglicht. Hierdurch kann ein Bediener während der Objektuntersuchung - ohne die Augen von den Okularen zu nehmen - das Mikroskop mit Hilfe der Bedienvorrichtung, welche beispielsweise in Form einer Computermaus ausgebildet sein könnte, dadurch bedienen, dass er über die Bedienvorrichtung mit der Mikroskop-Bedienoberfläche interagiert. Die Interaktion könnte hierbei derart erfolgen, dass dem Bediener in der Mikroskop-Bedienoberfläche eine Art Mauszeiger angezeigt wird, der mit Hilfe der Bedienvorrichtung in der Mikroskop-Bedienoberfläche positionierbar ist. Durch das Betätigen eines Tastschalters an der Bedienvorrichtung könnte dann beispielsweise ein bestimmter in der Mikroskop-Bedienoberfläche gezeigter Mikroskop-Betriebsmodus angewählt werden und vom motorisierten Mikroskop eingestellt werden. Somit kann selbst ein unerfahrener oder unbedarfter Mikroskopbediener das Mikroskop auch effizient und ergonomisch bedienen, ohne die Augen von den Okularen wegzubewegen zu müssen. Ein einfaches Erlernen kann durch eine intuitive Ausgestaltung der Mikroskop-Bedienoberfläche erreicht werden.

In einer ganz besonders bevorzugten Ausführungsform umfasst das Mikroskop einen Dokumentationsabgang, wobei das Bild der Mikroskop-Bedienoberfläche zusammen mit dem Objektbild am Dokumentationsabgang erzeugbar ist. An dem Dokumentationsabgang könnte beispielsweise eine Kamera anschließbar sein, vorzugsweise in Form einer CCD- oder Videokamera. Falls eine solche Kamera vorgesehen ist, mit welcher das Objektbild zusammen mit dem Bild der Mikroskop-Bedienoberfläche aufgezeichnet wird, um die überlagerten Bilder auf einen Computermonitor bzw. Videomonitor darzustellen, ist einerseits eine vollständige Fernbedienung des erfindungsgemäßen Mikroskops möglich, da der Bediener mit seinen Augen nicht in die Okulare des Mikroskops zu sehen braucht. Andererseits werden - bei entsprechender Abspeicherung der dargestellten Bildsequenzen - die Betriebsparameter des Mikroskops bei der Objektdetektion dokumentiert.

Ein solches Bild einer Mikroskop-Bedienoberfläche könnte beispielsweise mittels eines LCD- oder TFT-Displays erzeugt werden, wobei eine Einspiegelung bzw. Einkopplung des Bilds an einer geeigneten Stelle im Strahlengang des Mikroskops vorzusehen ist, vorzugsweise an einer der Zwischenbildebene des Detektionsstrahlengangs korrespondierenden Ebene. Das LCD- oder TFT-Display könnte hintergrundbeleuchtet oder transparent ausgebildet sein und im letzten Fall von Licht einer Lichtquelle durchleuchtet werden. Durch eine solche Ausgestaltung des erfindungsgemäßen Mikroskops kann der Bediener sämtliche Betriebsparameter des Mikroskops einstellen bzw. das Mikroskop bedienen, ohne die Augen vom Okular nehmen zu müssen. Hierdurch ist in ganz besonders vorteilhafter Weise eine einfache, unmittelbare und sehr effiziente Mikroskopbedienung möglich.

Im Konkreten weist die Mikroskop-Bedienoberfläche eine Menüführung, Symbole und/oder Ikons auf, die mittels der Bedienvorrichtung - vergleichbar einer Computermaus bei einem Computer - beispielsweise per Fadenkreuz, Cursor oder Mauszeiger anwählbar ist bzw. sind.

Das Bild der Mikroskop-Bedienoberfläche könnte ausgeblendet werden, wenn die Bedienvorrichtung vom Bediener länger als eine vorgebbare Zeit nicht benutzt wird. Diese Maßnahme dient hauptsächlich dazu, eine Objektdetektion - insbesondere bei einer lichtempfindlichen Fluoreszenzlichtdetektion - oder eine Objektbilddarstellung nicht zu stören. Das Bild der Mikroskop-Bedienoberfläche könnte auch auf einen Befehl vom Bediener des Mikroskops hin abgeschaltet werden.

Bevorzugt ist eine Helligkeitsregelung des Objektbilds und/oder des Bilds der Mikroskop-Bedienoberfläche vorgesehen, um einem Überleuchten des einen Bilds gegenüber dem anderen entgegen wirken zu können. Vorzugsweise ist die Helligkeitsregelung automatisch durchführbar oder durch den Bediener an der Bedienvorrichtung einstellbar.

In einer bevorzugten Ausführungsform ist die Bedienvorrichtung zum Einstellen von Betriebsparametern des Mikroskops vorgesehen und umfasst ein Touch-Pad, einen Touch-Screen, eine Computermaus und/oder einen Trackball, vorzugsweise mindestens einen Tastschalter und/oder ein Einstellrad aufweisend. Insoweit könnte es sich bei dieser Computermaus um eine herkömmliche, auf dem Markt erhältliche Computermaus handeln.

In einer ganz besonders bevorzugten Ausführungsform ist die Bedienvorrichtung zum Einstellen von Betriebsparametern des Mikroskops vorgesehen und weist ein Bedienelement auf, welches mindestens zwei um jeweils eine Achse drehbar angeordnete Betätigungselemente aufweist, wobei die Achsen der Betätigungselemente in Betriebsstellung im Wesentlichen vertikal angeordnet sind, wobei die zwei Betätigungselemente in vertikaler Richtung untereinander angeordnet sind und wobei ein weiteres um eine weitere Achse drehbar angeordnetes Betätigungselement vorgesehen ist, dessen Achse in Betriebsstellung im Wesentlichen vertikal oder horizontal angeordnet ist.

Bedienelemente dieser Art kommen insbesondere bei Mikroskopen mit mechanisch angetriebenem Mikroskoptisch zum Einsatz und sind unmittelbar am Mikroskoptisch angeordnet. Mit einem solchen Bedienelement ist die Position eines Mikroskoptischs oder eines auf einem Mikroskoptisch befindlichen Objektträgers in x- und y-Richtung einstellbar. Ein solches Bedienelement umfasst üblicherweise zwei Drehknöpfe bzw. Betätigungselemente, welche in vertikaler Richtung untereinander angeordnet sind, wobei deren Drehachsen koaxial angeordnet sind. Mit dem oberen Drehknopf an dem Mikroskoptisch kann das Objekt in die eine, mit dem unteren Drehknopf kann es in eine senkrechte Richtung hierzu positioniert werden. Die Drehung der Betätigungselemente wird hierbei durch koaxial angeordnete Wellen bzw. Hohlwellen auf den zur Ausführung der Mikroskoptischbewegungen vorgesehenen Mechanismus des Mikroskoptischs übertragen.

Zur Fokussierung, d.h. zur Relativpositionierung des Objekts zum Mikroskopobjektiv entlang der optischen Achse, ist üblicherweise am Mikroskopstativ ein drehbar angeordnetes Betätigungselement vorgesehen, dessen Drehachse im Wesentlichen horizontal angeordnet ist und mit dem der Mikroskoptisch oder das Objektiv entlang der optischen Achse positionierbar ist.

Grundsätzlich sei angemerkt, dass eine solche Anordnung der Betätigungselemente an einem herkömmlichen Mikroskop für einen Bediener funktionell sinnvoll und einfach zu erlernen ist, da die beiden untereinander angeordneten Betätigungselemente üblicherweise zur Positionierung des Mikroskoptischs in x- bzw. in y-Richtung entlang einer Drehrichtung erfolgt, deren Tangentialkomponente im Wesentlichen in der gleichen Ebene der Positionierungsrichtung des Mikroskoptischs angeordnet ist. Auch das zur Objektfokussierung dienende Betätigungselement weist eine Drehrichtung auf, dessen Tangentialkomponente unter anderem in vertikaler Richtung zeigt, entlang der letztendlich die Objektfokussierung erfolgt.

Die Anordnung der aus dem Stand der Technik an sich bekannten Betätigungselemente an einem Mikroskop ist insbesondere in ergonomischer Hinsicht problematisch. So sind die drei Betätigungselemente nahezu in allen Fällen zu weit voneinander beabstandet, so dass nach einem Fokussieren des Objekts die Hand des Bedieners an die zwei anderen Betätigungselemente zu führen ist, um den Mikroskoptisch in x- bzw. in y-Richtung einzustellen. Hierzu muss vor allem ein ungeübter Bediener die Augen von den Okularen entfernen, um zu sehen, wo die Drehköpfe des Mikroskoptischs angeordnet sind, um diese mit seiner Hand greifen und betätigen zu können. Hierdurch ist ein effizientes Arbeiten mit dem Mikroskop nur nach einer sehr langen Eingewöhnungsphase möglich, nämlich dann, wenn der Bediener sozusagen blind umgreifen und die Betätigungselemente bedienen kann.

Daher ist in einer ganz besonders bevorzugten Ausführungsform der Abstand zwischen den drei Betätigungselementen des Bedienelements derart bemessen ist, dass eine Betätigung der drei Betätigungselemente des Bedienelements mit einer Hand eines Bedieners gleichzeitig möglich ist. Somit ist deren Betätigung mit lediglich einer Hand des Bedieners ohne ein Umgreifen bzw. ohne umständliches Positionieren der Hand an weit voneinander entfernten Betätigungselementen möglich ist. Beispielsweise kann eines der drei Betätigungselemente des erfindungsgemäßen Bedienelements mit dem Daumen und die beiden anderen Betätigungselemente mit jeweils dem Zeigefinger und den Mittelfinger sogar gleichzeitig bedient werden. Somit ist das Bedienelement in besonders vorteilhafter Weise ergonomisch ausgebildet und es ist ein effizientes Arbeiten mit dem Mikroskop möglich.

Durch diese Anordnung der Betätigungselemente kann ein Bediener, der bislang mit einem Mikroskop mit lediglich mechanisch angetriebenem Mikroskoptisch gearbeitet hat, in ganz besonders vorteilhafter Weise auch ohne weiteres an dem motorisierten Mikroskop arbeiten. Es ist daher - wenn überhaupt - eine geringe Eingewöhnungsphase zur Mikroskopbedienung erforderlich, so dass in vorteilhafter Weise die Mikroskopbedienung leicht erlernbar ist.

Ganz allgemein ist das Bedienelement aber auch zur Bedienung für andere Geräte einsetzbar, bei denen beispielsweise ein Gegenstand in drei Dimensionen zu Positionieren ist. Insoweit wäre in diesem Fall das von den Betätigungselementen erzeugte Signal an eine Steuereinrichtung des Geräts oder unmittelbar an das Gerät zu übertragen, wobei das Bedienelement von dem Gerät räumlich getrennt ausgestaltet sein könnte.

Nun sind üblicherweise die Betätigungselemente direkt am Mikroskop angeordnet, so dass deren Betätigung unter Umständen ruckartige Bewegungen des Bedieners in Form von Erschütterungen auf das Mikroskop überträgt, wodurch in nachteiliger Weise eine erfolgreich Objektpositionierung erschwert oder gar unmöglich wird. Gerade wenn am Mikroskop zusätzliche Manipulatoren - beispielsweise für Patch-Clam-Anwendungen - adaptiert sind, können die am Mikroskop vorgesehenen Betätigungselemente schwer oder überhaupt nicht zugänglich sein. In solchen Fällen wäre ein "Fernbedienung" des Mikroskops mit einem vom Mikroskop mechanisch entkoppelten Bedienelement erforderlich.

Daher ist bevorzugt eine vom Mikroskop räumlich getrennte Ausgestaltung der Bedienvorrichtung vorgesehen, so dass eine mechanisch entkoppelte Bedienung eines Mikroskops möglich ist. Somit werden in vorteilhafter Weise Erschütterungen, die beispielsweise durch ruckartige Handbewegungen eines Mikroskopbedieners verursacht und auf das Mikroskop übertragen werden könnten, aufgrund der mechanischen Entkopplung eben nicht auf das Mikroskop übertragen. Vorzugsweise ist mit den Betätigungselementen der Bedienvorrichtung bzw. des Bedienelements ein von der Drehung abhängiges und an das Mikroskop übertragbares Signal erzeugbar.

Zur mechanischen Entkopplung der Bedienvorrichtung vom Mikroskop ist es erforderlich, dass die "fernbedienten" Komponenten motorisiert oder automatisiert ausgebildet sind. So könnte beispielsweise entweder ein Mikroskoptisch oder ein Objektträgerhalter auf einem Mikroskoptisch an dem Mikroskop motorisch angetrieben und somit fernsteuerbar ausgebildet sein. Weiterhin ist eine motorisch angetriebene Positionierung des Mikroskoptischs oder des Objektivs entlang der optischen Achse vorzusehen. Gegebenenfalls könnte ein automatisiertes Wechseln der Objektive vorgesehen sein.

In einer bevorzugten Ausführungsform ist zwischen den zwei untereinander angeordneten Betätigungselementen des Bedienelements ein im Wesentlichen horizontal angeordnetes Bauteil vorgesehen, an welchem die zwei Betätigungselemente drehbar angeordnet sind. Dieses Bauteil könnte neben entsprechenden Lagern oder Befestigungsmitteln für die Betätigungselemente Leitungen aufnehmen, über welche die elektrischen Signale übertragen werden können, welche von den Betätigungselementen des Bedienelements erzeugt werden. Das Bauteil könnte an einem Fußteil des Bedienelements befestigt sein, welches kastenförmig oder ein ergonomisches Design aufweisend ausgebildet sein könnte und/oder welches eine Auflage oder eine Unterstützung für eine Hand eines Bedieners aufweisen könnte. Insbesondere wenn die Betätigungselemente allein an einem horizontal angeordneten Bauteil drehbar angeordnet sind, ist eine freie Zugänglichkeit der Betätigungselemente von nahezu allen Seiten gewährleistet, was für eine einfache Bedienung hilfreich ist. Im Konkreten könnte das Bauteil eine Platte aufweisen oder könnte in Form einer Platte ausgebildet sein.

In einer ganz besonders bevorzugten Ausführungsform ist oberhalb dem Bauteil und seitlich versetzt zu den anderen zwei Betätigungselementen das weitere Betätigungselement drehbar angeordnet. Vorzugsweise weist das weitere Betätigungselement einer andere Größe auf, so dass für einen Bediener sowohl visuell als auch taktil erkennbar ist, dass das weitere Betätigungselement zum Einstellen eines anderen Betriebsparameters des Mikroskops dient als die zwei untereinander angeordneten Betätigungselemente.

Im Konkreten könnte ein Betätigungselement des Bedienelements einen Einstellknopf oder ein Einstellrad aufweisen. Der Einstellknopf bzw. das Einstellrad könnte eine im Wesentlichen zylindrische oder konische Form aufweisen. Auch eine einem Ellipsoidenabschnitt entsprechende Form eines Betätigungselements wäre denkbar. Insbesondere könnte die Oberfläche eines Betätigungselements griffig ausgebildet sein, beispielsweise könnte es einen gerändelten Einstellknopf aus Metall oder ein Einstellrad aus Gummi aufweisen.

In einer ganz besonders bevorzugten Ausführungsform sind die zwei Achsen der untereinander angeordneten Betätigungselemente des Bedienelements im Wesentlichen koaxial angeordnet. Somit ist eine vergleichbare Anordnung zu den Betätigungselementen eines herkömmlichen mechanisch betriebenen Mikroskoptischs gegeben, so dass ein Bediener eines herkömmlichen Mikroskops in vorteilhafter Weise sich innerhalb kürzester Zeit an die Mikroskopbedienung mit dem Bedienelement gewöhnen kann. Vorzugsweise sind die Durchmesser der zwei Betätigungselemente im Wesentlichen gleich.

Das Bedienelement umfasst mindestens einen Schalter, welcher insbesondere in Form eines Tastschalters und/oder eines Umschalters ausgebildet sein könnte. So könnten beispielsweise zwei Tastschalter vorgesehen sein, mit denen die Lampenhelligkeit variiert werden kann. Des Weiteren könnten ein oder zwei Tastschalter vorgesehen sein, mit dem bzw. mit denen mittels eines motorisch drehbaren Objektivrevolvers ein anderes Objektiv in den mikroskopischen Strahlengang eingebracht werden kann. Auch könnte ein Tastschalter vorgesehen sein, der eine Umschaltung zwischen unterschiedlichen Betriebsmodi des Mikroskops bewirken kann, beispielsweise vom Durchlichtmodus zum Fluoreszenzmodus. Der bzw. die Tastschalter könnten an einem Fußteil oder an mindestens einem der Betätigungselemente des Bedienelements angeordnet sein.

Vorzugsweise ist der Abstand zwischen den drei Betätigungselementen und dem Schalter derart bemessen, dass eine Betätigung der drei Betätigungselemente und des Schalters mit einer Hand eines Bedieners gleichzeitig möglich ist. Durch diese Maßnahme ist in vorteilhafter Weise eine einfache und effiziente Mikroskopbedienung möglich.

Mit der Bedienvorrichtung können weitere zur Bedienung eines Mikroskops dienende Signale erzeugt werden, wenn beispielsweise eine Unterlage vorgesehen ist, auf der die Bedienvorrichtung bewegbar angeordnet ist, und wenn mit der Bedienvorrichtung eine von einem Bediener veranlasste Relativbewegung zwischen der Bedienvorrichtung und der Unterlage ausführbar ist. Anhand dieser Relativbewegung zwischen der Bedienvorrichtung und der Unterlage könnten Richtungs- und/oder Positionssignale erzeugt werden, mit denen in vergleichbarer Weise beispielsweise ein motorisierter Mikroskoptisch in x- und/oder y-Richtung angesteuert werden könnte. Diese Art der Mikroskopbedienung ist mit einer Bedienerinteraktion vergleichbar, wie sie bei der Bedienung einer Computermaus vorliegt. Letztendlich kann auf diese Weise mit der Bedienvorrichtung richtungs- und entfernungsbezogene Signale erzeugt werden, die zur Mikroskopbedienung nutzbar sind. Vorzugsweise kann der Bediener zwischen den unterschiedlichen Arten der Eingabeform wählen, so dass er mit dem Mikroskoptisch ein Objekt in x- und/oder y-Richtung entweder mit den zwei untereinander angeordneten Betätigungselementen des Bedienelements oder mittels einer Relativbewegung zwischen der Bedienvorrichtung und der Unterlage ansteuert. Eine solche Umschaltung könnte mit einem an der Bedienvorrichtung vorgesehenen Tastschalter erfolgen.

Vorzugsweise könnte eine oben angesprochene Relativbewegung mit einer Hand des Bedieners an der Computermaus ausführbar sein. Wenn also der Bediener mit seiner Hand die Computermaus bewegt, wird aufgrund der Zuordnung der Computermaus zu der Bedienvorrichtung automatisch auch die Bedienvorrichtung mitbewegt. Im Konkreten ist eine Trägerplatte vorgesehen, an der einerseits die Betätigungselemente des Bedienelements und andererseits eine Aufnahme für die Computermaus vorgesehen ist.

Für den Fall, dass die Bedienvorrichtung einen Trackball oder eine Computermaus aufweist, könnte zur Aktivierung bzw. zur Deaktivierung einer Relativbewegung zwischen der Bedienvorrichtung und der Unterlage ein Mittel vorgesehen sein, mit welchem ein mechanischer oder optischer Kontakt zwischen der Computermaus und der Unterlage unterbrechbar ist, wenn die Computermaus vom Bediener nicht benutzt wird.

Das Mittel zum Unterbrechen eines mechanischen Kontakts zwischen der Computermaus und der Unterlage könnte eine die Computermaus zumindest teilweise von der Unterlage abhebende Feder aufweisen, so dass die Kugel, die auf der Unterseite der Computermaus teilweise aus dem Gehäuse hervorsteht, die Unterlage nicht berührt. Falls nun der Bediener seine Hand auf die Computermaus legt, drückt er hierdurch entgegen der Federkraft der Feder die Computermaus auf die Unterlage, wodurch die Kugel in Kontakt mit der Unterlage gebracht wird und Signale betreffend der Relativbewegung zwischen Bedienvorrichtung und Unterlage erzeugt werden können.

Falls die Computermaus in Form einer sogenannten optischen Computermaus ausgebildet ist, könnte ein Mittel zum Unterbrechen eines optischen Kontakts zwischen der Computermaus und der Unterlage vorgesehen sein, welches eine Blende aufweist, welche zwischen der Computermaus und der Unterlage in ihrer Unterbrechungsposition ortsfest zur Computermaus einbringbar ist. Die Blende könnte beispielsweise mit Hilfe eines der Computermaus zugeordneten Berührungsdetektors aktiviert beziehungsweise deaktiviert werden.

Nun könnte ein Informationsaustausch zwischen der Bedienvorrichtung und einer dem Mikroskop zugeordneten Steuereinheit mittels einer elektrischen oder optischen Verbindungsleitung erfolgen. So könnte eine Kabelverbindung vorgesehen sein, mit deren Hilfe elektrische Signale übertragen werden können. Auch eine flexible Glasfaserverbindung zwischen Bedienelement und Steuereinheit des Mikroskops wäre zur optischen Signalübertragung denkbar.

Ganz besonders bevorzugt erfolgt jedoch ein Informationsaustausch zwischen der Bedienvorrichtung und einer einem Mikroskop zugeordneten Steuereinheit bzw. Empfängereinheit mittels elektromagnetischer Wellen, insbesondere in Form von Radiowellen oder Infrarotlicht. Beispielsweise könnte es sich bei der oben erwähnten Computermaus um eine sogenannte Funk- oder Infrarotmaus handeln, die also die von ihr erzeugten elektrischen Signale mittels Funkwellen oder Infrarotstrahlung einer Empfängereinheit übermittelt. Die Übertragung erfolgt vorzugsweise nach einem genormten Standard, insbesondere nach dem Bluetooth-Standard. Somit können zur Produktion eines Bedienelements bzw. einer Bedienvorrichtung gängige Komponenten verwendet werden, wodurch in vorteilhafter Weise die Herstellungskosten eines erfindungsgemäßen Bedienelements gering gehalten werden können.

Der Informationsaustausch zwischen der Bedienvorrichtung und einer einem Mikroskop zugeordneten Steuereinheit betrifft insbesondere die von der Bedienvorrichtung erzeugten Signale. Allerdings können auch von der Steuereinheit des Mikroskops Signale an die Bedienvorrichtung übermittelt werden, so dass beispielsweise in Abhängigkeit des Betriebszustands des Mikroskops an der Bedienvorrichtung angeordnete Signalleuchten ein- und ausgeschaltet werden können.

Die Steuereinheit bzw. die Empfängereinheit verarbeitet die erzeugten Signale und erzeugt Steuer- und/oder Regelsignale und führt diese entsprechenden Stell- und/oder Regelelementen und/oder Aktuatoren des Mikroskops zu. Eine solche Steuereinheit könnte beispielsweise einen Einplatinencomputer bzw. ein Single Bord Computer aufweisen, der eine CPU, einen Tastaturanschluss, einen Ziffernblockanschluss, einen Grafikchip zur Displayansteuerung, einen Festplatten- und Floppydisk-Controller sowie gängige Schnittstellen aufweist, beispielsweise eine serielle, eine parallele, eine Netzwerk- oder eine Modemschnittstelle, einen CAN-Bus, USB und/oder FireWire. Die Steuereinheit eines Mikroskops benötigt in der Regel jedoch keine eigene Festplatte, da die Betriebssystemdaten und -programme allesamt ROMbasiert in dem Einplatinencomputer abgelegt werden können. Daten könnten beispielsweise über eine USB-Schnittstelle oder über einen Memory-Stick mit externen Geräten oder Computern ausgetauscht werden. Insbesondere mit einem Memory-Stick könnten persönliche Benutzerprofile eines jeden Bedieners zum Mikroskop übertragen werden.

Vorzugsweise umfasst das Mikroskop motorisierte und/oder ansteuerbare Baugruppen und/oder eine Steuereinheit, welche insbesondere in das Mikroskopstativ integrierbar ist bzw. sind. Letztendlich könnte das erfindungsgemäße Mikroskop zur Fernbedienung konfiguriert sein, wobei die fern zu bedienenden Komponenten motorisiert ausgebildet sein müssen. Als motorisierte Mikroskopkomponenten kommen insbesondere ein Mikroskoptisch, eine motorisierte Objektpositionierung entlang der optischen Achse zur Fokussierung, eine motorisierte Objektivumschaltung, eine motorisierte Filterumschaltung sowie eine motorisierte Betriebsmodusumschaltung in Frage.

In einer weiter bevorzugten Ausführungsform ist die Bedienvorrichtung am Mikroskop reversibel anbringbar. Somit kann lediglich eine Bedienvorrichtung für ein Mikroskop vorgesehen sein, mit welchem das Mikroskop sowohl in dem am Mikroskop angebrachten als auch in dem vom Mikroskop abgenommenen Zustand der Bedienvorrichtung bedient werden kann. Hierdurch entfallen in ganz besonders vorteilhafter Weise die zur Mikroskopbedienung am Mikroskop vorgesehenen Betätigungselemente, wodurch für einen Bediener eine einheitliche Mikroskopbedienung und darüber hinaus eine Reduzierung der Herstellungskosten erzielt wird. Vorzugsweise ist die Bedienvorrichtung mittels einer Klemm- oder Schanppverbindung am Mikroskop befestigbar, welche vergleichbar mit einer Verbindung eines Mobiltelefons an einer Freisprecheinrichtung sein könnte.

Insbesondere im dem am Mikroskop angebrachten Zustand ist ein Informations- und/oder Versorgungsaustausch zwischen Bedienvorrichtung und Mikroskop mittels elektrischer Kontakte vorgesehen. So könnten gegebenenfalls in der Bedienvorrichtung vorgesehene Akkumulatoren in dem am Mikroskop angebrachten Zustand aufgeladen werden. Die Akkumulatoren könnten zur Speißung einer Sendeeinheit der Bedienvorrichtung zur Informationsübertragung zwischen Mikroskop und Bedienvorrichtung in dem vom Mikroskop abgenommenen Zustand dienen.

Auch eine Fernbedienung des erfindungsgemäßen Mikroskops im Sinne der Telemikroskopie ist denkbar, indem nämlich eine Steuereinheit des Mikroskops mit einem Computernetzwerk oder über eine Satellitenverbindung mit einem weit entfernt angeordneten Computer oder Bedienerterminal verbindbar ist, wobei sowohl das Mikroskop als auch der entfernt angeordnete Computer oder Bedienerterminal jeweils mit einer Bedienvorrichtung ausgestattet sind. Hierdurch ist in besonders vorteilhafter Weise für einen am entfernt angeordneten Computer befindlichen Bediener eine Fernbedienung des Mikroskops mit Hilfe der Bedienvorrichtung intuitiv und realistisch bedienbar.

In einer bevorzugten Ausführungsform umfasst das erfindungsgemäße Mikroskop eine am Mikroskopstativ angeordnete Anzeigeeinheit. Mit der Anzeigeeinheit ist eine Mikroskop-Bedienoberfläche anzeigbar, über welche die motorisierten oder automatisierten Komponenten des Mikroskops bedient werden können. Die Anzeigeeinheit weist insbesondere ein LCD- oder ein TFT-Display (LCD = Liquid Crystal Device) auf. Dieses Display könnte zur direkten Bedienung in Form eines Touchscreens ausgebildet sein, so dass ein Bediener die Mikroskopbedienung über das Display durch Fingerberührung veranlassen kann. Ganz besonders bevorzugt ist die Anzeigeeinheit vom Mikroskop abnehmbar ausgeführt, so dass die Anzeigeeinheit im vom Mikroskop abgenommenen Zustand neben die Bedienvorrichtung platziert werden kann. Insoweit ist dann - eine diesbezügliche Automatisierung bzw. Modularisierung des Mikroskops vorausgesetzt - eine vollständige Fernbedienung des Mikroskops möglich.

In verfahrensmäßiger Hinsicht wird die eingangs genannte Aufgabe durch die Merkmale des Patentanspruchs 26 gelöst. Hiernach ist ein Verfahren zur Bedienung eines Mikroskops nach einem der Ansprüche 1 bis 25 dadurch gekennzeichnet, dass eine Objektpositionierung relativ zu einem Mikroskopobjektiv eines Mikroskops vom Bediener mittels Bedienvorrichtung veranlasst wird.

Hierzu sind insbesondere drei Vorgehensweisen denkbar. Hierbei werden für eine Objektpositionierung eine Richtung und ein Betrag, um welchen das Objekt entlang der Richtung zu positionieren ist, mit Hilfe der Bedienvorrichtung erzeugt.

In einer Vorgehensweise wird auf der Anzeigeeinheit des Mikroskops bzw. in dem Bild einer Mikroskop-Bedienoberfläche ein Fadenkreuz oder ein Mauszeiger dargestellt. Das Fadenkreuz oder der Mauszeiger kann durch das Ausführen einer Relativbewegung zwischen der Bedienvorrichtung und einer Unterlage in dem dem Bediener zur Verfügung gestellten Bild positioniert werden. Durch das Niederhalten eines Schalters an der Bedienvorrichtung oder einer Maustaste einer Computermaus der Bedienvorrichtung werden Mikroskoptischbewegungen in x- und y-Richtung aktiviert, wobei die Relativbewegungen zwischen Bedienvorrichtung und Unterlage bei niedergehaltener Maustaste in Signale umgewandelt werden, welche der vom Bediener gewünschten Richtung und dem gewünschten Betrag der Objektpositionierung entsprechen. Es wird eine nahezu zeitgleiche Mikroskoptischbewegung ausgeführt, wobei dem Mikroskopbediener hierbei das jeweils aktuelle Mikroskopbild des Objekts angezeigt wird.

In einer zweiten Vorgehensweise wird in dem dem Mikroskopbediener zur Verfügung gestellten Bild lediglich ein Rahmen dargestellt. Falls nun das Fadenkreuz bzw. der Mauszeiger mit Hilfe der Bedienvorrichtung derart positioniert wird, dass es bzw. er an den Rahmen anstößt, wird die Mikroskoptischbewegung aktiviert. Auch bei dieser sogenannten Fadenkreuz-Bewegung über den dargestellten Rahmen hinaus wird aufgrund der Relativbewegung zwischen Bedienvorrichtung und Unterlage ebenfalls Richtung und Betrag der auszuführenden Objektpositionierung erzeugt. Der Mikroskoptisch wird unmittelbar angesteuert und dem Mikroskopbediener wird das jeweilige Objektbild während der Objektpositionierung angezeigt.

Gemäß einer dritten Vorgehensweise werden zur Objektpositionierung auf der Anzeigeeinheit bzw. auf dem Bild der Mikroskop-Bedienoberfläche sogenannte Scrollbars oder Schieberegler angezeigt, wie sie bei Computerprogrammen üblich sind. Durch Anklicken und verschieben einer entsprechenden Schaltfläche eines Schieberegler ist hierdurch das Erzeugen von Objektpositionierungssignalen der Richtung und dem Betrag nach möglich. Auch in diesem Modus wird das jeweilige Objektbild während der Objektpositionierung angezeigt.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung der bevorzugten Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen jeweils in einer schematische Darstellung
- Fig. 1: ein Ausführungsbeispiel einer Bedienvorrichtung in einer perspektivischen Ansicht,
- Fig. 2: die Bedienvorrichtung aus Fig. 1 in einer Vorderansicht,
- Fig. 3: ein zweites Ausführungsbeispiel einer Bedienvorrichtung in einer Draufsicht,
- Fig. 4: die Bedienvorrichtung aus Fig. 3 in einer Seitenansicht und
- Fig. 5: ein Ausführungsbeispiel eines erfindungsgemäßen Mikroskops.

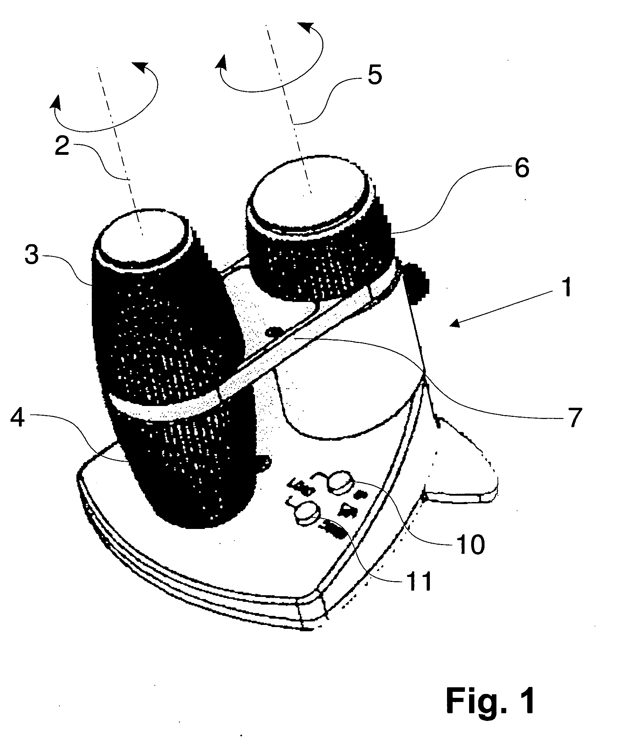

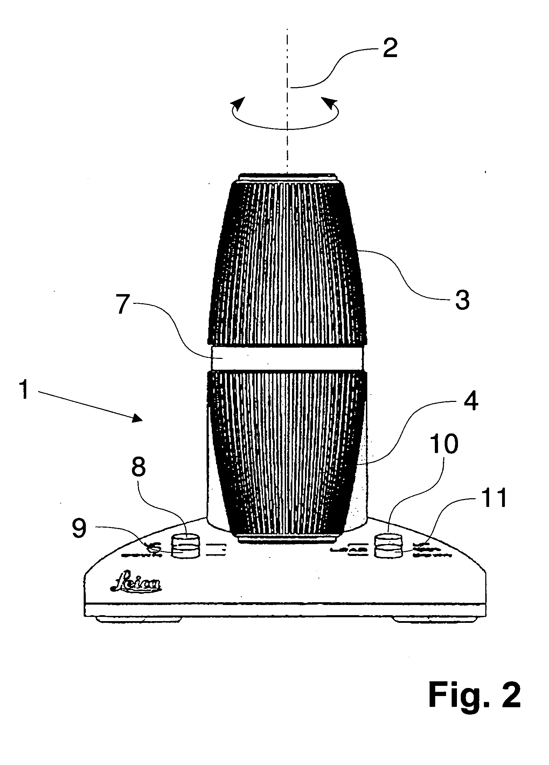

Die Fig. 1 und 2 zeigen eine Bedienvorrichtung 1 zum Einstellen von Betriebsparametern eines in den Fig. 1 und 2 nicht gezeigten Mikroskops, wobei gleiche Bauteile mit gleichen Bezugszeichen gekennzeichnet sind. Die Bedienvorrichtung 1 umfasst zwei, jeweils um eine Achse 2 drehbar angeordnete Betätigungselemente 3, 4. Da die Achsen der drehbar angeordneten Betätigungselemente 3, 4 koaxial angeordnet sind, ist lediglich eine Achse 2 in Fig. 1 gezeigt. Die Achse 2 ist in Betriebsstellung des Bedienelements im Wesentlichen vertikal angeordneten, was Fig. 2 entnehmbar ist. Die zwei Betätigungselemente 3, 4 sind in vertikaler Richtung untereinander angeordnet. Es ist ein weiteres, um eine weitere Achse 5 drehbar angeordnetes Betätigungselement 6 vorgesehen, dessen Achse 5 in Betriebsstellung ebenfalls im Wesentlichen vertikal angeordnet ist. Die Drehrichtungen der Betätigungselemente 3, 4, 6 um die Achsen 2, 5 sind mit den Doppelpfeilen angedeutet.

Die Bedienvorrichtung 1 ist räumlich von einem Mikroskop getrennt ausgestaltet. Mit den Betätigungselementen 3, 4 und 6 ist ein von der Drehung abhängiges Signal erzeugbar, welches an ein Mikroskop übermittelbar ist. Der Abstand zwischen den drei Betätigungselementen 3, 4, 6 ist derart bemessen, dass eine Betätigung der drei Betätigungselemente 3, 4, 6 mit einer Hand eines Bedieners gleichzeitig möglich ist.

Mit den Betätigungselementen 3, 4, 6 der Bedienvorrichtung 1 wird einerseits eine Objektpositionierung in der Fokalebene durch eine Betätigung der Betätigungselemente 3, 4 erzielt, wobei mit dem Betätigungselement 3 das Objekt in x- und mit dem Betätigungselement 4 das Objekt in y-Richtung positionierbar ist. Die zwei Betätigungselemente 3, 4 sind vergleichbar zu Betätigungselementen angeordnet, welche bei herkömmlichen mechanisch betätigbaren Mikroskoptischen vorgesehen sind. Eine Positionierung des Objekts relativ zum Mikroskopobjektiv wird entlang der optischen Achse mit dem Betätigungselement 6 durchgeführt.

Zwischen den zwei untereinander angeordneten Betätigungselementen 3, 4 ist ein im Wesentlichen horizontal angeordnetes Bauteil 7 vorgesehen, an welchem die drei Betätigungselemente 3, 4, 6 drehbar angeordnet sind. Das Bauteil 7 hat im Wesentlichen eine Form einer Platte.

Oberhalb des Bauteils 7 und seitlich versetzt zu den anderen zwei Betätigungselementen 3, 4 ist das weitere Betätigungselement 6 drehbar angeordnet.

Die Betätigungselemente 3, 4, 6 sind jeweils in Form eines Einstellknopfs ausgebildet und weisen eine im Wesentlichen zylindrische, jedoch leicht konisch verlaufende Form auf. Die Oberfläche der Betätigungselemente 3, 4, 6 ist mit Griffrillen ausgebildet, so dass eine im Wesentlichen rutschfreie Betätigung möglich ist. Die Durchmesser der zwei Betätigungselemente 3, 4 sind gleich.

Die Bedienvorrichtung 1 umfasst vier Schalter 8 bis 11, welche in Form von Tastschaltern ausgebildet sind. Der Abstand zwischen den drei Betätigungselementen 3, 4, 6 und den Schaltern 8 bis 11 ist derart bemessen, dass eine Betätigung der drei Betätigungselemente 3, 4, 6 und der Schalter 8 bis 11 mit einer Hand eines Bedieners gleichzeitig möglich ist. Die Schalter 8 und 9 dienen zur Verringerung bzw. zur Erhöhung der Lampenhelligkeit des Mikroskops. Die Schalter 10 und 11 dienen zum Wechseln des Objektivs des Mikroskops.

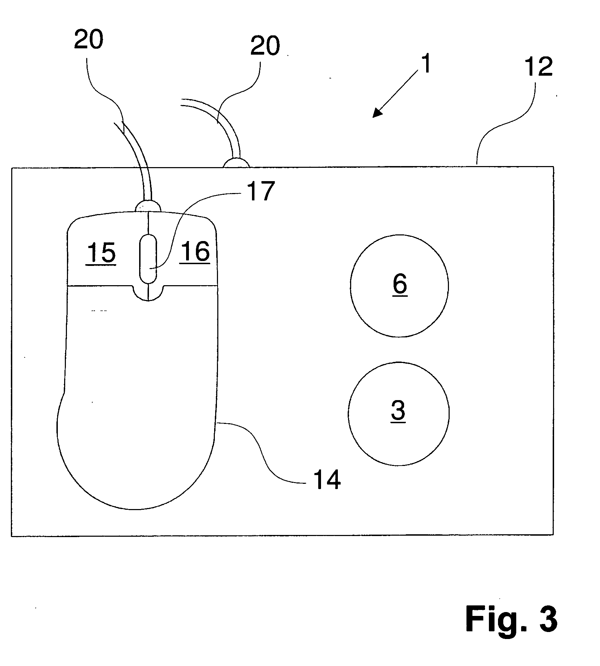

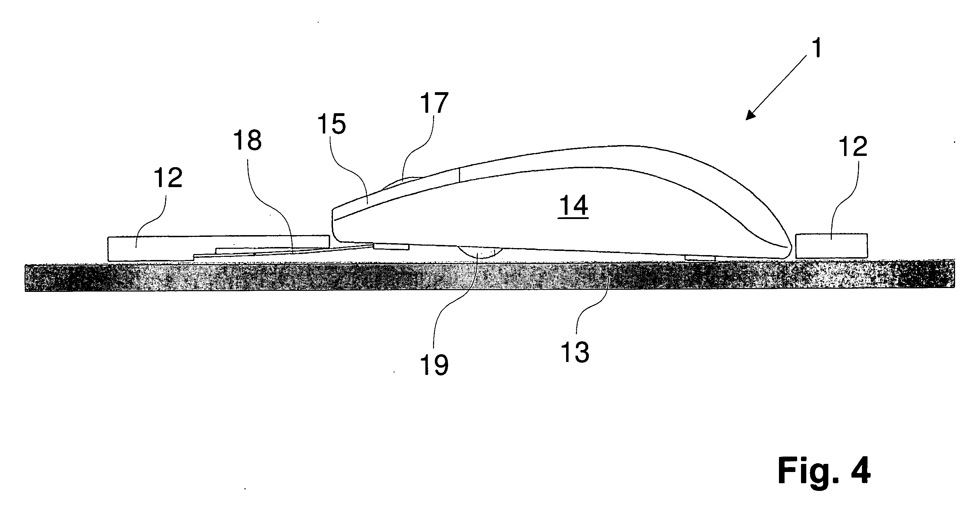

Die Fig. 3 und 4 zeigen ein weiteres Ausführungsbeispiel einer Bedienvorrichtung 1, wobei in der Draufsicht der Fig. 3 lediglich die Betätigungselemente 3 und 6 gezeigt sind. Das unter dem Betätigungselement 3 angeordnete Betätigungselement 4 ist in Fig. 3 nicht gezeigt. Die Bedienvorrichtung 1 aus den Fig. 3 und 4 umfasst eine Trägerplatte 12, auf welcher die Betätigungselemente 3, 4, 6 angeordnet sind.

In Fig. 4 ist gezeigt, dass eine Unterlage 13 vorgesehen ist, auf welcher die Bedienvorrichtung 1 bewegbar angeordnet ist. Durch eine von einem Bediener initiierte Relativbewegung zwischen der Bedienvorrichtung 1 und der Unterlage 13 sind Richtungs- und/oder Positionssignale erzeugbar, mit denen beispielsweise ein Mikroskoptisch eines Mikroskops ansteuerbar ist.

Die Bedienvorrichtung 1 aus den Fig. 3 und 4 umfasst eine Computermaus 14, welche zwei Tastschalter 15, 16 und ein Einstellrad 17 aufweist. Eine Relativbewegung zwischen der Bedienvorrichtung 1 und der Unterlage 13 kann mit einer Hand des Bedieners an der Computermaus 14 ausgeführt werden. Hierbei wird die gesamte Bedienvorrichtung 1 zusammen mit der Trägerplatte 12 relativ zur Unterlage 13 bewegt.

In Fig. 4 ist gezeigt, dass ein Mittel 18 in Form eines Federblechs vorgesehen ist, mit welchem ein mechanischer Kontakt zwischen der Kugel 19 der Computermaus 14 und der Unterlage 13 unterbrechbar ist, wenn die Computermaus 14 vom Bediener nicht benutzt wird. Das Mittel 18 zum Unterbrechen des mechanischen Kontakts zwischen der Computermaus 14 und der Unterlage 13 wirkt derart, dass die Computermaus 14 teilweise von der Unterlage 13 angehoben ist, wenn der Bediener seine Hand nicht auf die Computermaus 14 gelegt hat, so dass bei einer versehentlichen Relativbewegung zwischen Bedienvorrichtung 1 und Unterlage 13 die Kugel 19 nicht bewegt wird.

In Fig. 3 ist angedeutet, dass ein Informationsaustausch zwischen der Bedienvorrichtung 1 und einer einem Mikroskop zugeordneten Steuereinheit mittels einer elektrischen Verbindungsleitung 20 erfolgt.

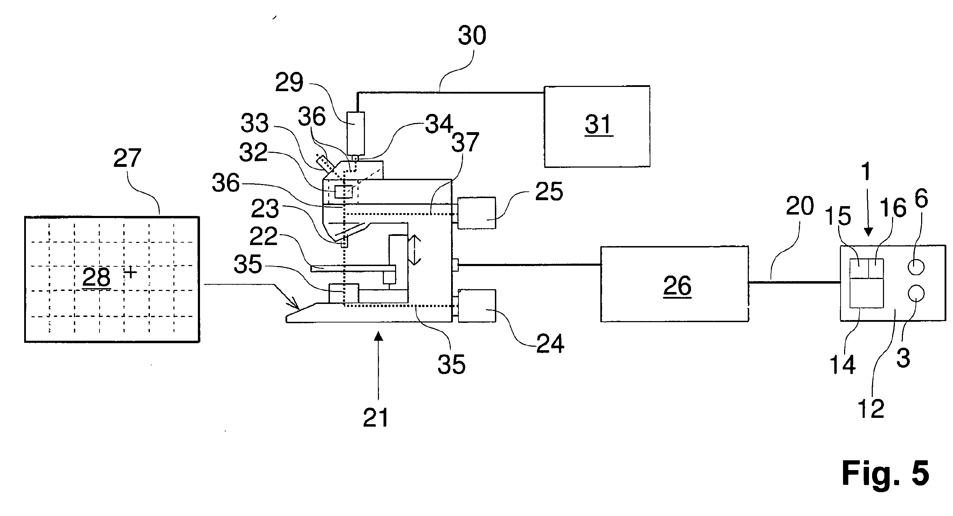

Fig. 5 zeigt ein erfindungsgemäßes Mikroskop 21, welches mit einer Bedienvorrichtung 1 bedient werden kann. Das Mikroskop 21 umfasst einen motorisierten Mikroskoptisch 22, der in x-, y- und z-Richtung motorgesteuert positionierbar ist. Weiterhin können die Mikroskopobjektive 23 motorgesteuert gewechselt werden. Das Mikroskop 21 umfasst des Weiteren ein Lampengehäuse 24, dass zur Durchlichtbeleuchtung dient, und ein Lampengehäuse 25, dass zur Auflichtbeleuchtung dient, beispielsweise im Fluoreszenzmodus. Auch die Betriebsmodi des Mikroskops 21 können ferngesteuert eingestellt bzw. umgeschaltet werden.

Der Beleuchtungsstrahlengang 35 erstreckt sich im Durchlichtmodus des Mikroskops 21 vom Lampengehäuse 24 bis zum Objekt auf dem Mikroskoptisch 22. Der Detektionsstrahlengang 36 in diesem Modus erstreckt sich vom Objekt zum Okular 33 bzw. zur Videokamera 29. Der Beleuchtungsstrahlengang 37 für den Auflichtmodus des Mikroskops 21 erstreckt sich vom Lampengehäuse 25 bis zum Objekt auf dem Mikroskoptisch 22. Der Detektionsstrahlengang 36 dieses Modus ist mit dem des Durchlichtmodus im Wesentlichen identisch und unterscheidet sich gegebenenfalls durch andere im Strahlengang angeordnete Filter.

Lediglich zur besseren Darstellung ist die Steuereinheit 26 als externe Einheit gezeigt, wobei die Steuereinheit 26 in das Mikroskopstativ integrierbar ist. Die Bedienvorrichtung 1 übermittelt die von den Betätigungselementen 3, 4, 6, 15 und 16 erzeugten Signale über die Verbindungsleitung 20 der Steuereinheit 26. Die Steuereinheit 26 verarbeitet die von der Bedienvorrichtung 1 erzeugten Signale und erzeugt Steuersignale, mit denen beispielsweise der Mikroskoptisch 22 angesteuert wird.

Am Mikroskopstativ des Mikroskops 21 ist eine Anzeigeeinheit 27 vorgesehen, mit welcher eine Mikroskop-Bedienoberfläche 28 anzeigbar ist. Die Anzeigeeinheit 27 umfasst ein TFT-Display und ist lediglich zur deutlicheren Darstellung in einer Aufsicht in seinem vom Mikroskop 21 abnehmbaren Betriebszustand vergrößert in Fig. 5 gezeigt. Weiterhin ist am Mikroskop 21 eine Videokamera 29 adaptiert, deren Bildsignale über die Verbindungsleitung 30 zu dem Videomonitor 31 übermittelt werden.

Mit dem Bezugszeichen 32 ist lediglich schematisch angedeutet, dass dem Detektionsstrahlengang des Mikroskops 21 in erfindungsgemäßer Weise ein Bild einer Mikroskop-Bedienoberfläche 28 überlagerbar ist, welches zusammen mit dem Objektbild am Mikroskopokular 33 und am Dokumentationsabgang 34 des Mikroskops 21 erzeugbar ist. Das Bild der Mikroskop-Bedienoberfläche 28 ist mittels eines transparenten LCD-Displays erzeugbar, welches in Fig. 5 nicht gezeigt ist.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

### Bezugszeichenliste

- 1: Bedienvorrichtung
- 2: Achse von (3) und (4)
- 3: Betätigungselement
- 4: Betätigungselement
- 5: Achse von (6)
- 6: weiteres Betätigungselement
- 7: horizontal angeordnetes Bauteil
- 8 - 11: Schalter
- 12: Trägerplatte
- 13: Unterlage
- 14: Computermaus
- 15: linker Tastschalter von (14)
- 16: Rechter Tastschalter von (14)
- 17: Einstellrad von (14)
- 18: Mitte zum Anheben vom (14)
- 19: Kugel von (14)
- 20: elektrische Verbindungsleitung von (1)
- 21: Mikroskop
- 22: motorisierter Mikroskoptisch
- 23: Mikroskopobjektiv
- 24: Lampengehäuse
- 25: Lampengehäuse
- 26: Steuereinheit
- 27: Anzeigeeinheit
- 28: Mikroskop-Bedienoberfläche
- 29: Videokamera
- 30: Verbindungsleitung zwischen (29) und (31)
- 31: Videomonitor
- 32: seitliches Einblenden des Bilds von (28)
- 33: Mikroskopokular
- 34: Dokumentationsabgang
- 35: Beleuchtungsstrahlengang im Durchlichtmodus
- 36: Detektionsstrahlengang im Durchlicht- und im Auflichtmodus
- 37: Beleuchtungsstrahlengang im Auflichtmodus

## Patentansprüche

1. Mikroskop mit einem Okular (33), einem zur Beleuchtung eines Objekts dienenden Beleuchtungsstrahlengang (35, 37) und mit einem das Objekt abbildenden Detektionsstrahlengang (36),
**dadurch gekennzeichnet, dass** dem Detektionsstrahlengang (36) ein Bild einer Mikroskop-Bedienoberfläche (28) überlagerbar ist, welches zusammen mit einem Objektbild an dem Okular (33) des Mikroskops (21) erzeugbar ist und dass zur Interaktion zwischen einem Bediener und der Mikroskop-Bedienoberfläche (28) mindestens eine Bedienvorrichtung (1, 14) vorgesehen ist.

2. Mikroskop nach Anspruch 1, **dadurch gekennzeichnet, dass** ein Dokumentationsabgang (34) vorgesehen ist, an welchen vorzugsweise eine Kamera anschließbar ist, wobei das Bild einer Mikroskop-Bedienoberfläche (28) zusammen mit dem Objektbild am Dokumentationsabgang (34) erzeugbar ist, und/oder dass das Bild einer Mikroskop-Bedienoberfläche (28) mittels eines LCD- oder TFT-Displays erzeugbar ist, welches transparent und von Licht einer Lichtquelle durchleuchtbar oder hintergrundbeleuchtet ausgeführt ist, wobei die Mikroskop-Bedienoberfläche (28) eine Menüführung, Symbole und/oder Ikons aufweisen kann, welche mit der Bedienvorrichtung (1, 14) - vergleichbar einer Computermaus bei einem Computer - anwählbar ist bzw. sind.

3. Mikroskop nach Anspruch 1 oder 2, **dadurch gekennzeichnet, dass** das Bild der Mikroskop-Bedienoberfläche (28) ausblendbar oder abschaltbar ist, wenn die Bedienvorrichtung (1, 14) vom Bediener länger als eine vorgebbare Zeit nicht benutzt wird oder wenn es vom Bediener des Mikroskops (21) abgeschaltet wird, und/oder dass eine - vorzugsweise automatisch durchführbare - Helligkeitsregelung des Objektbilds und/oder des Bilds der Mikroskop-Bedienoberfläche (28) vorgesehen ist, und dass die Bedienvorrichtung (1, 14) zum Einstellen von Betriebsparametern des Mikroskops vorgesehen sein kann und ein Touch-Pad, einen Touch-Screen, eine Computermaus (14) und/oder einen Trackball aufweisen kann, insbesondere mindestens einen Schalter, Tastschalter (15, 16) und/oder ein Einstellrad (17) aufweisend.

4. Mikroskop nach einem der Ansprüche 1 bis 3, **dadurch gekennzeichnet, dass** die Bedienvorrichtung (1, 14) zum Einstellen von Betriebsparametern des Mikroskops vorgesehen ist und ein Bedienelement (1) aufweist, welches mindestens zwei um jeweils eine Achse (2) drehbar angeordnete Betätigungselemente (3, 4) aufweist, wobei die Achsen (2) der Betätigungselemente (3, 4) in Betriebsstellung im Wesentlichen vertikal angeordnet sind, wobei die zwei Betätigungselemente (3, 4) in vertikaler Richtung untereinander angeordnet sind und wobei ein weiteres um eine weitere Achse (5) drehbar angeordnetes Betätigungselement (6) vorgesehen ist, dessen Achse (5) in Betriebsstellung im Wesentlichen vertikal oder horizontal angeordnet ist, und dass vorzugsweise der Abstand zwischen den drei Betätigungselementen (3, 4, 6) des Bedienelements (1) derart bemessen ist, dass eine Betätigung der drei - jeweils beispielsweise in Form eines Einstellknopfs oder eines Einstellrads ausgebildeten - Betätigungselemente (3, 4, 6) des Bedienelements (1) mit einer Hand eines Bedieners gleichzeitig möglich ist.

5. Mikroskop nach Anspruch 4, **dadurch gekennzeichnet, dass** die Bedienvorrichtung (1) vom Mikroskop (21) räumlich getrennt ausgebildet ist, wobei mit den Betätigungselementen (3, 4, 6) der Bedienvorrichtung (1) ein von der Drehung abhängiges und an das Mikroskop (21) übertragbares Signal erzeugbar ist, und/oder dass ein Informationsaustausch zwischen der Bedienvorrichtung (1, 14) und einer dem Mikroskop (21) zugeordneten Steuereinheit (26) mittels einer elektrischen oder optischen Verbindungsleitung (20) erfolgt oder dass ein Informationsaustausch zwischen der Bedienvorrichtung (1, 14) und einer dem Mikroskop (21) zugeordneten Empfängereinheit mittels elektromagnetischer Wellen erfolgt, insbesondere in Form von Radiowellen oder Infrarotlicht.

6. Mikroskop nach Anspruch 5, **dadurch gekennzeichnet, dass** die Steuereinheit (26) bzw. die Empfängereinheit die erzeugten Signale verarbeitet und Steuer- und/oder Regelsignale erzeugt und diese entsprechenden Stell- und/oder Regelelementen und/oder Aktuatoren des Mikroskops (21) zuführt, und/oder dass motorisierte und/oder ansteuerbare Baugruppen (22, 23) und/oder eine Steuereinheit (26) - insbesondere in das Stativ des Mikroskops (21) integriert - vorgesehen sein können bzw. vorgesehen sein kann.

7. Mikroskop nach einem der Ansprüche 4 bis 6, **dadurch gekennzeichnet, dass** zwischen den zwei untereinander angeordneten Betätigungselementen (3, 4) des Bedienelements (1) ein im Wesentlichen horizontal angeordnetes Bauteil (7) - welches vorzugsweise eine Platte aufweist - vorgesehen ist, an welchem die zwei Betätigungselemente (3, 4) drehbar angeordnet sind, und/oder dass oberhalb des Bauteils (7) und seitlich versetzt zu den anderen zwei Betätigungselementen (3, 4) des Bedienelements (1) das weitere Betätigungselement (6) drehbar angeordnet ist.

8. Mikroskop nach einem der Ansprüche 1 bis 7, **dadurch gekennzeichnet, dass** eine Unterlage (13) vorgesehen ist, auf welcher die Bedienvorrichtung (1, 14) bewegbar angeordnet ist, wobei mit der Bedienvorrichtung (1, 14) eine von einem Bediener veranlasste Relativbewegung zwischen der Bedienvorrichtung (1, 14) und der Unterlage (13) ausführbar ist, anhand derer Richtungs- und/oder Positionssignale erzeugbar sind, und dass die Bedienvorrichtung (1, 14) einen Trackball oder eine Computermaus aufweisen kann, wobei Richtungs- und/oder Positionssignale mit dem Trackball oder der Computermaus (14) erzeugbar und zum Mikroskop übertragbar sein können.

9. Mikroskop nach Anspruch 8, **dadurch gekennzeichnet, dass** ein Mittel (18) vorgesehen ist, mit welchem ein mechanischer oder optischer Kontakt zwischen der Computermaus (14) und der Unterlage (13) unterbrechbar ist, wenn die Computermaus (14) vom Bediener nicht benutzt wird, und dass das Mittel (8) zum Unterbrechen eines mechanischen Kontakts zwischen der Computermaus (14) und der Unterlage (13) eine die Computermaus (14) zumindest teilweise von der Unterlage (13) abhebende Feder aufweisen kann oder dass das Mittel zum Unterbrechen eines optischen Kontakts zwischen der Computermaus (14) und der Unterlage (13) eine Blende aufweisen kann, welche zwischen der Computermaus (14) und der Unterlage (13) in ihrer Unterbrechungsposition ortsfest zur Computermaus (14) einbringbar ist.

10. Verfahren zur Bedienung eines Mikroskops nach einem der Ansprüche 1 bis 9, **dadurch gekennzeichnet, dass** eine Positionierung eines Objekts relativ zu einem Mikroskopobjektiv (23) des Mikroskops (21) vom Bediener mittels Bedienvorrichtung (1, 14) veranlasst wird.
